# EUROPEAN PATENT APPLICATION

(11) **EP 4 385 885 A1**
(43) Date of publication of application: **19.06.2024**
(21) Application number: 23215371.8
(22) Date of filing: 08.12.2023
(51) Int. Cl.: B64C 1/36, B64C 5/06, H01Q 1/28

(54) **REMOVABLE HOLLOW DORSAL FIN**

(30) Priority: 16.12.2022 GB 202219055
(71) Applicant: Raytheon Systems Limited, Essex CM17 9NA (GB)
(72) Inventor: BARON, Laurence, Harlow, CM17 9NA (GB)
(74) Representative: Dentons UK and Middle East LLP

(57) **Abstract**

A first embodiment of a hollow dorsal fin (200) that can be selectively releasably connected to the fuselage (120) of an aircraft (100) is described herein. An interior (210) of the hollow dorsal fin (200) comprises a compartment (250). A second embodiment of a hollow dorsal fin (300) is described comprising a compartment (350) in an interior of the hollow dorsal fin (300), an opening (360) configured to provide access to the compartment (350) and a cover (370) for covering the opening (360). An aircraft (100) comprising the hollow dorsal fin (200, 300), a fuselage(120), and electrical equipment (290) is also provided. Methods for providing a hollow dorsal fin (200, 300), and methods for installing electrical equipment (290) on aircraft (100) are also described.

## Description

### TECHNICAL FIELD

Aircraft typically comprise a hollow dorsal fin that is a permanent riveted composite structure. Antennae and/or sensors are typically mounted on the upper fuselage of the aircraft.

### BACKGROUND OF THE INVENTION

Small aircraft have limitations on where electrical equipment, such as antennae and/or sensors, can be mounted. There is a need to identify additional places on aircraft for storing electrical equipment. For certain aircraft, there is a requirement for the location where this equipment is mounted to be discrete so that it may not be easily located by an observer. A further requirement is that the aircraft must be optimised in terms of mass, speed and aerodynamics; it is sometimes undesirable to add additional housing for sensors and/or antennae to the often-crowded upper fuselage. To improve practical and covert storage of sensors and/or antennae, there is a need to adapt a component that is already found on aircraft for this purpose.

### SUMMARY

The present invention solves this problem by providing a modified hollow dorsal fin comprising a compartment in which electrical equipment can be stored. To provide easy access to the antennae and/or sensors, the compartment is removable. Alternatively, the dorsal fin can comprise an opening that allows access to the compartment and a cover for covering the opening. Providing the electrical equipment in the interior of the hollow dorsal fin simultaneously allows the dorsal fin to be able to fulfil its function of providing balance and directional stability, as well as utilising previously unused space on the aircraft, and making it difficult for an observer to locate the electrical equipment on the aircraft.

In particular, in a first embodiment the present invention provides a hollow dorsal fin for an aircraft as recited in claim 1 and its dependent claims. In the invention, an interior of the hollow dorsal fin defines a compartment and at least a portion of the hollow dorsal fin is configured to be selectively releasably connected to a fuselage of the aircraft. The at least a portion of the hollow dorsal fin being selectively releasably connectable to the aircraft means that the at least a portion of the hollow dorsal fin can be removed from the aircraft and the same at least a portion of the hollow dorsal fin can be reinstalled on the aircraft. In this process, neither the hollow dorsal fin, nor the aircraft is damaged by the at least a portion of the hollow dorsal fin being removed from the aircraft and then reinstalled on the aircraft. Advantageously, the interior of the hollow dorsal fin defining a compartment may allow objects to be stored inside the hollow dorsal fin. At least a portion of the hollow dorsal fin being configured to be selectively releasably connected to a fuselage of an aircraft may allow for the at least a portion of the hollow dorsal fin to be easily retrofit to any compatible fuselage. The at least a portion of the hollow dorsal fin configured to be selectively releasably connected to a fuselage of the aircraft may be the entire hollow dorsal fin. The compartment may allow for electrical equipment such as antennae and/or sensors to be stored inside the hollow dorsal fin.

The hollow dorsal fin may comprise first, second and third portions wherein the third portion of the hollow dorsal fin comprises the compartment, is configured to be selectively releasably connected to the fuselage of the aircraft and is located between the first portion and the second portion, and wherein the first and second portions are configured to be fixedly connected to the fuselage of the aircraft. The first and second portions of the hollow dorsal fin may act as a frame that provides structural support to the third portion of the hollow dorsal fin.

A first weatherproof seal may be between the first and third portions of the hollow dorsal fin, and a second weatherproof seal may be between the second and third portions of the hollow dorsal fin. The weatherproof seals may protect the dorsal from the effects of harsh weather. The seals may also prevent water from getting into the compartment, which may in turn prevent water from disrupting any objects positioned inside the compartment.

The hollow dorsal fin may comprise first fastening means for selectively releasably connecting the at least a portion of the hollow dorsal fin, or the third portion of the hollow dorsal fin, to the fuselage of the aircraft. The hollow dorsal fin may also comprise second fastening means for fixedly connecting the first and second portions of the hollow dorsal fin to the fuselage of the aircraft. The fastening means may be standard rivets typically found on an aircraft.

The hollow dorsal fin may not be transmissive to electromagnetic radiation in the visible range. It may not be possible for an external observer to see what is inside the hollow dorsal fin.

The at least a portion of the hollow dorsal fin, or the third portion of the hollow dorsal fin, may be made of a radome material. The radome material may be wideband. The at least a portion of the hollow dorsal fin, or the third portion of the hollow dorsal fin, may be transmissive to radiofrequency radiation. The hollow dorsal fin being transmissive to radiation may allow for the antennae and/or sensors positioned inside the compartment to transmit and receive radiation through the hollow dorsal fin, without the hollow dorsal fin disrupting the signal. The radiation may be radio frequency electromagnetic radiation. When the at least a portion of the hollow dorsal fin or the third portion of the hollow dorsal fin comprises the compartment, the radiation may only be transmitted through the at least a portion of the hollow dorsal fin or the third portion of the hollow dorsal fin. The first and second portions of the hollow dorsal fin may not be transmissive to radiofrequency electromagnetic radiation.

The compartment of the hollow dorsal fin may comprise at least one divider, at least one stringer and/or at least one frame. The at least one divider may allow for the compartment to be divided into further sub-compartments. The at least one divider may not be transmissive to radiofrequency electromagnetic radiation to prevent interference between signals emitted and received between the sub-compartments. The at least one divider, at least one stringer and/or at least one frame may be or may not be transmissive to radiofrequency electromagnetic radiation. This may prevent disruption of any signals emitted or received from the compartment and/or sub-compartments. The at least one stringer and/or at least one frame may provide structural support to the hollow dorsal fin.

The hollow dorsal fin may comprise mounting equipment positioned inside the compartment, wherein the mounting equipment is for mounting electrical equipment inside the compartment. The mounting equipment may include fittings such as brackets, nuts and bolts, for example. The electrical equipment may be an antenna and/or a sensor.

The present invention also provides a second embodiment of a hollow dorsal fin as recited in claim 7 and its dependent claims. In the invention, the hollow dorsal fin comprises a compartment in an interior of at least a portion of the hollow dorsal fin, an opening configured to provide access to the compartment, and a cover for covering the opening. Advantageously, the cover may be easily removed. As well as this, any objects stored in the compartment may be easily accessed.

The hollow dorsal fin may comprise first fastening means for selectively releasably connecting the hollow dorsal fin to the fuselage of the aircraft. The hollow dorsal fin may comprise second fastening means for fixedly connecting the hollow dorsal fin to the fuselage of the aircraft. The first and/or second fastening means may be standard rivets typically found on an aircraft.

The hollow dorsal fin may not be transmissive to electromagnetic radiation in the visible range. It may not be possible for an external observer to see what is inside the hollow dorsal fin.

The at least a portion of the hollow dorsal fin may be made of a radome material. The radome material may be wideband. The at least a portion of the hollow dorsal fin may be transmissive to radiofrequency radiation. The at least a portion of the hollow dorsal fin being transmissive to radiation may allow for antennae and/or sensors positioned inside the compartment to transmit and receive radiation through the at least a portion of the hollow dorsal fin, without the at least a portion of the hollow dorsal fin disrupting the signal. The radiation may be radiofrequency electromagnetic radiation.

The compartment of the hollow dorsal fin may comprise at least one divider, at least one stringer and/or at least one frame. The at least one divider may allow for the compartment to be divided into further sub-compartments. The at least one divider may not be transmissive to radiofrequency electromagnetic radiation to prevent interference between signals emitted and received between the sub-compartments. The at least one divider, at least one stringer and/or at least one frame may be or may not be transmissive to radiofrequency electromagnetic radiation. This may prevent disruption of any signals emitted or received from the compartment and/or sub-compartments. The at least one stringer and/or at least one frame may provide structural support to the hollow dorsal fin.

The hollow dorsal fin may comprise mounting equipment positioned inside the compartment, wherein the mounting equipment is for mounting electrical equipment inside the compartment. The mounting equipment may include fittings such as brackets, nuts and bolts, for example. The electrical equipment may be an antenna and/or a sensor.

The present invention also provides a method for providing a dorsal fin on an aircraft as recited in claim 16 and its dependent claims. The method comprises releasably connecting the hollow dorsal fin of the first embodiment or the hollow dorsal fin of the second embodiment to the fuselage of an aircraft. The method may include removing a fixed dorsal fin from the fuselage before releasably connecting the hollow dorsal fin to the fuselage. A fixed dorsal fin is one that is not designed to be removed from an aircraft and placed back on an aircraft - the fixed dorsal fin, or the aircraft itself, may be damaged in the process of removing the fixed dorsal fin so that the fixed dorsal fin cannot be reinstalled on the aircraft. The method may comprise removing the at least a portion of the hollow dorsal fin from the fuselage, installing electrical equipment on the fuselage and releasably reconnecting the at least a portion of the hollow dorsal fin to the fuselage such that the electrical equipment is within the compartment.

The present invention also provides a method of installing electrical equipment on an aircraft as recited in claim 19 and its dependent claims. The method comprises removing a fixed dorsal fin from the fuselage of the aircraft, providing the hollow dorsal fin of the first embodiment or the hollow dorsal fin of the second embodiment, installing electrical equipment on the fuselage of the aircraft and releasably connecting the at least a portion of the hollow dorsal fin to the fuselage of the aircraft such that the electrical equipment is within the compartment. This may allow for an existing aircraft to be retrofit with the hollow dorsal fin. A fixed dorsal fin is one that is not designed to be removed from an aircraft and placed back on an aircraft - the fixed dorsal fin, or the aircraft itself, may be damaged in the process of removing the fixed dorsal fin so that the fixed dorsal fin cannot be reinstalled on the aircraft.

The present invention also provides an aircraft as recited in claim 20 and its dependent claims. The aircraft comprises a fuselage, the first embodiment of the hollow dorsal fin or the second embodiment of the hollow dorsal fin releasably connected to the fuselage, and electrical equipment positioned inside the compartment of the hollow dorsal fin. The aircraft may further comprise a conduit configured to be connected to the electrical equipment, wherein the conduit may provide a connection between the compartment and an interior of the fuselage. The conduit may already be installed on the aircraft. The electrical equipment positioned inside the compartment of the hollow dorsal fin may piggyback on the preinstalled conduit. This may allow for electrical equipment positioned inside the compartment to be connected to a power supply in the fuselage of the aircraft.

### BRIEF DESCRIPTION OF THE DRAWINGS

Fig. 1 shows an aircraft comprising a hollow dorsal fin.
Fig. 2 shows a first embodiment of a hollow dorsal fin.
Fig. 3 shows a second embodiment of a hollow dorsal fin.
Fig. 4 shows a method for providing a hollow dorsal fin on an aircraft.

### DETAILED DESCRIPTION

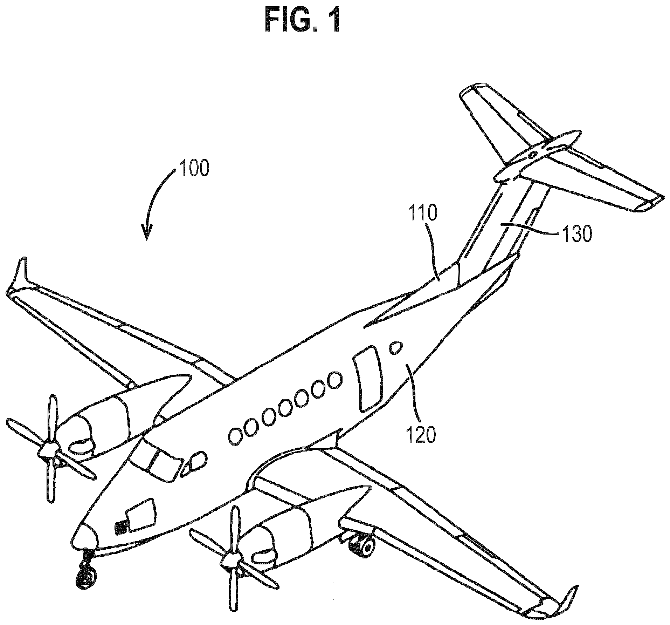

With reference to the figures, Fig. 1 shows an aircraft 100 comprising a fuselage 120, a dorsal fin 110 and a vertical stabiliser fin 130. The dorsal fin is positioned between the aft fuselage 120 and the vertical stabiliser fin 130. The dorsal fin 110 is dimensioned according to the specific requirements of the aircraft 100. The dorsal fin 110 is hollow and an interior of the dorsal fin defines a compartment. At least a portion of the dorsal fin 110 is configured to be selectively releasably connected to the fuselage 120 of the aircraft 100. The at least a portion of the hollow dorsal fin being selectively releasably connectable to the aircraft means that the hollow dorsal fin can be removed from the aircraft and the same at least a portion of the hollow dorsal fin can be reinstalled on the aircraft. In this process, neither the hollow dorsal fin, nor the aircraft is damaged by the hollow dorsal fin being removed from the aircraft and then reinstalled on the aircraft.

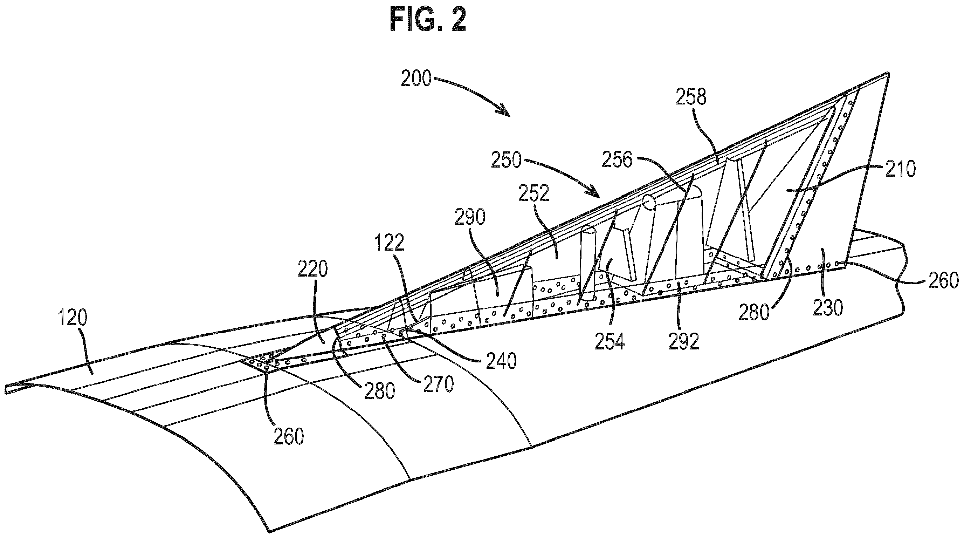

Fig. 2 demonstrates a first embodiment of a hollow dorsal fin 200 positioned on the fuselage 120. An interior 210 of the hollow dorsal fin 200 comprises three portions: a front portion 220, a back portion 230 and a middle portion 240. The middle portion 240 comprises the compartment 250.

The front portion 220 and the back portion 230 are configured to be fixedly connected to the fuselage 120. One or more fasteners 260 are used to fixedly connect the front portion 220 and the back portion 230 to the fuselage 120. The one or more fasteners 260 may be at least one rivet, at least one welded joint, at least one bolt or any other appropriate type of fastener. The at least one rivet may be a solid shank rivet, a blind rivet, or any other type of rivet.

The middle portion 240 is configured to be selectively releasably connected to the fuselage 120. One or more fasteners 270 are employed to releasably connect the middle portion 240 to the fuselage 120. The one or more fasteners 270 may be at least one removable rivet, or any other type of removable fastener. A removal tool may be used to remove the removable rivet.

The hollow dorsal fin 200 comprises an aviation seal 280 between the middle portion 240 and the front portion 220 and an aviation seal 280 between the middle portion 240 and the back portion 230. The aviation seals 280 are weatherproof seals suitable for preventing water from getting between the respective portions 220, 230, 240 of the hollow dorsal fin 200. The aviation seals 280 are also suitable for withstanding the weather conditions associated with high altitudes. The aviation seals 280 are composed of rubber or any other suitable material.

The compartment 250 of the hollow dorsal fin 200 is dimensioned to contain electrical equipment 290. The compartment of the hollow dorsal fin also comprises mounting equipment 292 for installing the electrical equipment 290 on the fuselage 120. The electrical equipment 290 may comprise antennae and/or sensors as well as Line Replaceable Units (LRU's) that cannot be located elsewhere. The antennae and/or sensors can transmit and receive radiation. The radiation may be radiofrequency electromagnetic radiation (RF).

The fuselage 120 comprises a conduit 122 for connecting the electrical equipment 290 to a power source located in the interior of the fuselage 120.

The middle portion 240 is removable as described above, which allows for maintenance of the electrical equipment 290. The middle portion 240 of the hollow dorsal fin 200 is made of a material that allows the electrical equipment to transmit and receive RF radiation through the middle portion 240 of the hollow dorsal fin. The material also protects the electrical equipment from weather conditions. The material may be transmissive to RF radiation or non-transmissive to RF radiation and have embedded features or be plain solid. The front portion 220 and the back portion 230 may or may not be made of a material that is transmissive to RF radiation. The hollow dorsal fin 200 is made of a material that is not transmissive to radiation in the visible range of the electromagnetic spectrum.

The compartment 250 comprises sub-compartments 252. The sub-compartments are divided by at least one divider 254. The at least one divider 254 may or may not be made of a material that is transmissive to RF radiation. For providing structural support to the compartment 250, the compartment 250 can also comprise at least one stringer 256 and/or at least one frame 258. The stringer and frame are made of a material that is transmissive to RF radiation.

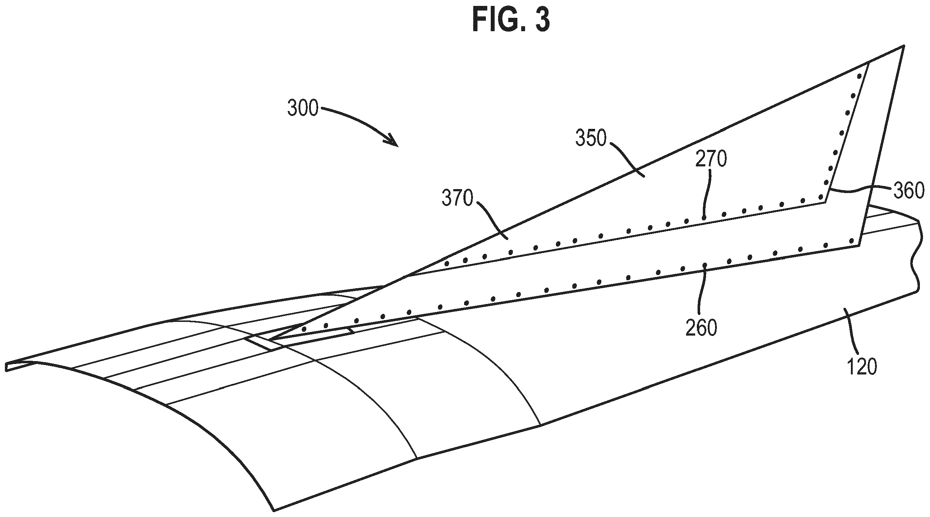

Fig. 3 shows a second embodiment of a hollow dorsal fin 300 on fuselage 120. The hollow dorsal fin 300 is similar to hollow dorsal fins 110 and 200. The interior of hollow dorsal fin 300 defines a compartment 350. The hollow dorsal fin 300 comprises an opening 360 that allows access to the compartment 350, and a cover 370 to cover the opening 360. Fasteners 270 are provided to removably secure the cover to the opening. The cover 370 may be connected to the opening 360 using a hinge.

The hollow dorsal fin 300 is configured to be fixedly connected to the fuselage with fasteners 260. Alternatively, the hollow dorsal fin 300 may be configured to be selectively releasably connected to the fuselage with removable fasteners.

Similarly to the compartment 250, the compartment 350 is dimensioned to store electrical equipment, such as the electrical equipment of the first embodiment. The hollow dorsal fin 300 can comprise mounting equipment, such as the mounting equipment of the first embodiment, for installing the electrical equipment on the fuselage 120. The mounting equipment can comprise fittings such as brackets, nuts and bolts, for example. The opening 360 is configured to allow access to the compartment 350 to allow maintenance of the electrical equipment.

The hollow dorsal fin 300 is made of a material that allows the electrical equipment to transmit and receive RF radiation through the hollow dorsal fin. The material also protects the electrical equipment from weather conditions. The material may be transmissive to RF radiation or non-transmissive to RF radiation and have embedded features or be plain solid. The hollow dorsal fin 300 is made of a material that is not transmissive to radiation in the visible range of the electromagnetic spectrum.

The compartment 350 can comprise sub-compartments divided by at least one divider, such as the sub-compartments and at least one divider discussed in the first embodiment. The at least one divider may or may not be made of a material that is transmissive to RF radiation. For providing structural support to the compartment 350, the compartment 350 can also comprise at least one stringer and/or at least one frame such as the at least one stringer and at least one frame discussed in the first embodiment. The at least one stringer and/or at least one frame can be made of a material that is transmissive to RF radiation.

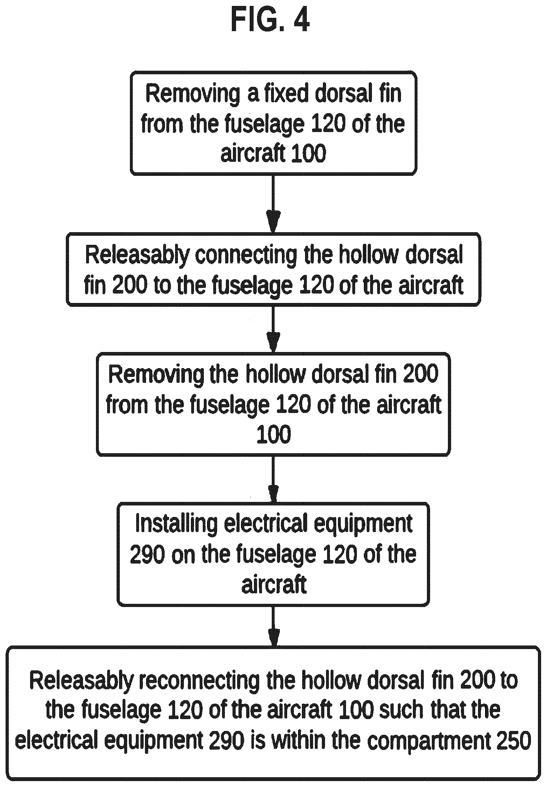

Fig. 4 shows a method for fitting the hollow dorsal fin 200 to an aircraft 100. Securing the hollow dorsal fin 200 onto the aircraft includes fixedly connecting the front portion 220 and the back portion 230 to the fuselage using fasteners 260. The method also includes releasably connecting the middle portion 240 to the fuselage using fasteners 270.

The method can be further be adapted for installing the electrical equipment 290 in the compartment 250. The middle portion 240 is disconnected from the fuselage 120, and electrical equipment 290 is installed on the fuselage 120. The electrical equipment is connected to the power source by the conduit 122. The conduit 122 may already be installed on the aircraft. The electrical equipment 290 positioned inside the compartment 250 of the hollow dorsal fin 200 may piggyback on the preinstalled conduit 122. The middle portion 240 is then releasably reconnected to the fuselage using fasteners 270 such that the electrical equipment 290 is within the compartment.

Alternatively, the hollow dorsal fin 300 is fixedly secured to the fuselage using fasteners 260, or selectively releasably connected to the fuselage using fasteners 270. To install equipment in the compartment 350, the cover 370 is removed and the opening is accessed so that electrical equipment, such as the electrical equipment of the first embodiment, is installed on the fuselage and connected to the power source by a conduit, such as the conduit of the first embodiment. The conduit may already be installed on the aircraft. The electrical equipment positioned inside the compartment 350 of the hollow dorsal fin 300 may piggyback on the preinstalled conduit. The cover 370 is then replaced.

To adapt the method for retrofitting the hollow dorsal fin 200, 300 to an aircraft, before the step of securing the hollow dorsal fin 200, 300 to the fuselage 120 there is a step of first removing a fixed dorsal fin from the fuselage 120. A fixed dorsal fin is one that is not designed to be removed from an aircraft and placed back on an aircraft - the fixed dorsal fin, or the aircraft itself, may be damaged in the process of removing the fixed dorsal fin so that the fixed dorsal fin cannot be reinstalled on the aircraft.

As has been described herein, methods and systems are provided for maximising the amount of space on aircraft that can be used for storing antennae and/or sensors by repurposing the hollow dorsal fin as a compartment in which electrical equipment can be stored. The methods and systems described allow for the sensor installations to be discrete and covert.

### EMBODIMENTS

1. A hollow dorsal fin for an aircraft, wherein an interior of the hollow dorsal fin defines a compartment, and at least a portion of the hollow dorsal fin is configured to be selectively releasably connected to a fuselage of the aircraft.
2. The hollow dorsal fin of embodiment 1, wherein the at least a portion of the hollow dorsal fin that is configured to be selectively releasably connected to the fuselage of the aircraft is the entire hollow dorsal fin.
3. The hollow dorsal fin of embodiment 1, wherein the hollow dorsal fin comprises first, second and third portions, and wherein:
   the first and second portions are configured to be fixedly connected to the fuselage of the aircraft, and
   the third portion comprises the compartment and is configured to be selectively releasably connected to the fuselage of the aircraft, and is located between the first portion and the second portion.
4. The hollow dorsal fin of embodiment 3, further comprising a first seal between the first portion and the third portion, and a second seal between the second portion and the third portion, wherein the first and second seals are weatherproof.
5. The hollow dorsal fin of any of embodiments 1 to 3, further comprising first fastening means for selectively releasably connecting the at least a portion of the hollow dorsal fin to the fuselage of the aircraft.
6. The hollow dorsal fin of any of embodiments 3, 4 or 5 when dependent on embodiment 3, further comprising second fastening means for fixedly connecting the first and second portions of the hollow dorsal fin to the fuselage of the aircraft.
7. A hollow dorsal fin for an aircraft, comprising:
   a compartment in an interior of at least a portion of the hollow dorsal fin;
   an opening configured to provide access to the compartment; and
   a cover for covering the opening.
8. The hollow dorsal fin of any preceding embodiment, wherein the hollow dorsal fin is not transmissive to electromagnetic radiation in the visible range.
9. The hollow dorsal fin of any preceding embodiment, wherein the at least a portion of the hollow dorsal fin is made of a radome material.
10. The hollow dorsal fin of any preceding embodiment, wherein the at least a portion of the hollow dorsal fin is transmissive to radiofrequency electromagnetic radiation.
11. The hollow dorsal fin of any of embodiments 3 to 6, when dependent on embodiment 3, wherein the first portion and the second portion are not transmissive to radiofrequency electromagnetic radiation.
12. The hollow dorsal fin of any preceding embodiment, the compartment comprising one or
   more of: at least one divider;
   at least one stringer; and
   at least one frame.
13. The hollow dorsal fin of embodiment 12, wherein the at least one divider, at least one stringer, and/or at least one frame is transmissive to radiofrequency electromagnetic radiation.
14. The hollow dorsal fin of embodiment 12, wherein the compartment comprises the at least one divider, wherein the at least one divider is not transmissive to radiofrequency electromagnetic radiation.
15. The hollow dorsal fin of any preceding embodiment, wherein the hollow dorsal fin comprises mounting equipment positioned inside the compartment, wherein the mounting equipment is for mounting electrical equipment inside the compartment.
16. A method for providing a dorsal fin on an aircraft, the method comprising:
   releasably connecting the hollow dorsal fin of any of embodiments 1 to 15 to the fuselage of the aircraft.
17. The method of embodiment 16, further comprising before the step of releasably connecting the hollow dorsal fin: removing a fixed dorsal fin from the fuselage of the aircraft.
18. The method of embodiment 16 or embodiment 17, further comprising:
   removing the at least a portion of the hollow dorsal fin from the fuselage of the aircraft;
   installing electrical equipment on the fuselage of the aircraft; and
   releasably reconnecting the at least a portion of the hollow dorsal fin to the fuselage of the aircraft such that the electrical equipment is within the compartment.
19. A method of installing electrical equipment on an aircraft, the method comprising:
   removing a fixed dorsal fin from the fuselage of the aircraft;
   providing the hollow dorsal fin of any of embodiments 1 to 15;
   installing electrical equipment on the fuselage of the aircraft; and
   releasably connecting the at least one portion of the hollow dorsal fin to the fuselage of the aircraft such that the electrical equipment is within the compartment.
20. An aircraft comprising:
   a fuselage;
   the hollow dorsal fin of any of embodiments 1 to 15, releasably connected to the fuselage; and
   electrical equipment positioned inside the compartment.
21. The aircraft of embodiment 20, further comprising a conduit configured to be connected to the electrical equipment, wherein the conduit provides a connection between the compartment and an interior of the fuselage of the aircraft.
22. The hollow dorsal fin of embodiment 15, the method of embodiments 18 or 19, or the aircraft of embodiments 20 or 21, wherein the electrical equipment is an antenna and/or a sensor.

## Claims

1. A hollow dorsal fin for an aircraft, wherein an interior of the hollow dorsal fin defines a compartment, and at least a portion of the hollow dorsal fin is configured to be selectively releasably connected to a fuselage of the aircraft.

2. The hollow dorsal fin of claim 1, wherein the at least a portion of the hollow dorsal fin that is configured to be selectively releasably connected to the fuselage of the aircraft is the entire hollow dorsal fin.

3. The hollow dorsal fin of claim 1, wherein the hollow dorsal fin comprises first, second and third portions, and wherein:
the first and second portions are configured to be fixedly connected to the fuselage of the aircraft, and
the third portion comprises the compartment and is configured to be selectively releasably connected to the fuselage of the aircraft, and is located between the first portion and the second portion,
optionally, further comprising a first seal between the first portion and the third portion, and a second seal between the second portion and the third portion, wherein the first and second seals are weatherproof, and/or, wherein the first portion and the second portion are not transmissive to radiofrequency electromagnetic radiation.

4. The hollow dorsal fin of any of claims 1 to 3, further comprising first fastening means for selectively releasably connecting the at least a portion of the hollow dorsal fin to the fuselage of the aircraft.

5. The hollow dorsal fin of claim 3 or claim 4 when dependent on claim 3, further comprising second fastening means for fixedly connecting the first and second portions of the hollow dorsal fin to the fuselage of the aircraft.

6. A hollow dorsal fin for an aircraft, comprising:
a compartment in an interior of at least a portion of the hollow dorsal fin;
an opening configured to provide access to the compartment; and
a cover for covering the opening.

7. The hollow dorsal fin of any preceding claim, wherein the hollow dorsal fin is not transmissive to electromagnetic radiation in the visible range.

8. The hollow dorsal fin of any preceding claim, wherein:
the at least a portion of the hollow dorsal fin is made of a radome material; and/or
the at least a portion of the hollow dorsal fin is transmissive to radiofrequency electromagnetic radiation.

9. The hollow dorsal fin of any preceding claim, the compartment comprising one or more of:
at least one divider;
at least one stringer; and
at least one frame.

10. The hollow dorsal fin of claim 9, wherein the at least one divider, at least one stringer, and/or at least one frame is transmissive to radiofrequency electromagnetic radiation, or,
wherein the compartment comprises the at least one divider, wherein the at least one divider is not transmissive to radiofrequency electromagnetic radiation.

11. The hollow dorsal fin of any preceding claim, wherein the hollow dorsal fin comprises mounting equipment positioned inside the compartment, wherein the mounting equipment is for mounting electrical equipment inside the compartment, optionally wherein the electrical equipment is an antenna and/or a sensor.

12. A method for providing a dorsal fin on an aircraft, the method comprising:
releasably connecting the hollow dorsal fin of any of claims 1 to 11 to the fuselage of the aircraft; and optionally, further comprising before the step of releasably connecting the hollow dorsal fin:
removing a fixed dorsal fin from the fuselage of the aircraft.

13. The method of claim 12, further comprising:
removing the at least a portion of the hollow dorsal fin from the fuselage of the aircraft;
installing electrical equipment on the fuselage of the aircraft; and
releasably reconnecting the at least a portion of the hollow dorsal fin to the fuselage of the aircraft such that the electrical equipment is within the compartment.

14. A method of installing electrical equipment on an aircraft, the method comprising:
removing a fixed dorsal fin from the fuselage of the aircraft;
providing the hollow dorsal fin of any of claims 1 to 11;
installing electrical equipment on the fuselage of the aircraft; and
releasably connecting the at least one portion of the hollow dorsal fin to the fuselage of the aircraft such that the electrical equipment is within the compartment.

15. An aircraft comprising:
a fuselage;
the hollow dorsal fin of any of claims 1 to 11, releasably connected to the fuselage; and
electrical equipment positioned inside the compartment; and
optionally, further comprising a conduit configured to be connected to the electrical equipment, wherein the conduit provides a connection between the compartment and an interior of the fuselage of the aircraft.
